Europäisches Patentamt

European Patent Office

Office européen des brevets

(19)

(11) EP 0 867 499 A1

(12) **EUROPEAN PATENT APPLICATION**

(43) Date of publication:
**30.09.1998 Bulletin 1998/40**

(21) Application number: **98301214.7**

(22) Date of filing: **19.02.1998**

(51) Int Cl.6: **C10M 169/00**, G11B 19/20
// (C10M169/00, 105:36, 105:38,
117:04, 133:12, 135:18),
C10N10:02, C10N10:04,
C10N10:08, C10N10:10,
C10N50:10

(84) Designated Contracting States:
**AT BE CH DE DK ES FI FR GB GR IE IT LI LU MC
NL PT SE**
Designated Extension States:
**AL LT LV MK RO SI**

(30) Priority: **26.03.1997 US 824665**

(71) Applicant: **INTERNATIONAL BUSINESS
MACHINES CORPORATION
Armonk, NY 10504 (US)**

(72) Inventors:
• **Karis, Thomas Edward
San Martin, California 95046 (US)**
• **Nagaraj, Holavanahally Seshachar
Morgan Hill, California 95037 (US)**

(74) Representative: **Burt, Roger James, Dr.
IBM United Kingdom Limited
Intellectual Property Department
Hursley Park
Winchester Hampshire SO21 2JN (GB)**

(54) **Improved spindle motor**

(57) The invention relates to a spindle motor for use in a magnetic recording data storage device which can operate effectively at high rotational speeds. The spindle motor has ball bearings coated with an improved lu-bricant. The improved lubricant comprises an alkali hy-droxystearate, an ester oil, a dialkyldiphenylamine and a dialkyldithiocarbamate. The lubricant improves rota-tional operation of the motor.

FIG. 3

EP 0 867 499 A1

**Description**

The present invention relates to a spindle motor having an improved lubricant for use with a magnetic recording device.

Current growth rates for the digital magnetic recording data storage industry show a significant annual increase in recording densities and transfer rate and a decrease in seek time. To continue on this growth rate curve, the recording industry is being forced to make a number of significant changes in the design and operation of the magnetic recording device. Digital magnetic recording devices for data storage generally comprise a thin film magnetic recording disk, a spindle motor for rotating the disk, and a head or transducer which is moved along or above the surface of the rotating disk to read and write information on the disk. The thin film magnetic recording disks generally comprise a substrate, a magnetic layer such as a cobalt-based metal alloy, a protective amorphous carbon layer and a layer of perfluoropolyether disposed on the carbon overcoat. The magnetic recording disks are mounted on a spindle motor which rotates the disk at a high rotational speed. The spindle motor generally comprises (i) a spindle shaft attached to a housing (ii) a spindle hub rotatably mounted on the shaft and (iii) lubricant covered ball bearings positioned in races formed in the shaft and/or hub.

The head or transducer is attached to a carrier or slider having an air bearing surface which is supported during operation adjacent the data surface of the disk by a cushion of air generated by the rotating disk.

The recording device also comprises a positioning actuator connected to the carrier for moving the head to the desired location on the disk during reading or writing operations.

Conventional magnetic recording devices are operated at a rotational speed of about 3600 RPM to over 7000 RPM. It has been discovered that during normal operation of the disk drive at higher rotational speeds e.g., greater than 7500 RPM, the spindle motor begins to undergo acoustic vibrations associated with chemical breakdown of the spindle bearing grease lubricant within a short period of time. Continued operation of the recording device in the presence of the acoustic vibrations leads to mechanical failure of the spindle bearing.

It is an object of the present invention to provide a spindle motor with an improved lubricant which operates for extended periods of time at higher rotational speeds without unacceptable acoustic vibrations.

The present invention relates to an improved spindle motor for use with a digital magnetic recording data storage device which can operate effectively at high rotational speeds. A magnetic recording device generally comprises (a) a magnetic recording disk (b) a spindle motor associated with the disk operable for rotating the disk at selected rotational speeds of from 3,000 to greater than 7,000 RPM e.g., 10,000-20,000 RPM; (c) a head supported on an air bearing carrier (head and carrier are an integral member) for magnetically writing data to or magnetically reading data from the magnetic layer on the disk; and (d) an actuator connected to the head carrier for moving the head across the rotating disk. The brushless, direct current, permanent magnet spindle motor comprises (i) a spindle shaft attached to a housing, (ii) a spindle hub rotatably mounted on the shaft and (iii) lubricant covered ball bearings positioned in races formed in the shaft and/or hub. The improved lubricant comprises a thickener, an oil, a alkyldiphenylamine and a alkyldithiocarbamate. The lubricant improves the rotational operation of the disk drive.

A more thorough disclosure of the present invention is presented in the detailed description which follows and the accompanying figures.

Fig. 1 is a section view of a magnetic recording disk drive.

Fig. 2 is a top view of a magnetic recording disk drive.

Fig. 3 is a cross sectional view of a magnetic recording device with the spindle motor.

Fig. 4 is a cross-sectional view of another spindle motor.

The present invention relates to an improved high performance spindle motor for use in a digital magnetic recording device for reading and writing data magnetically.

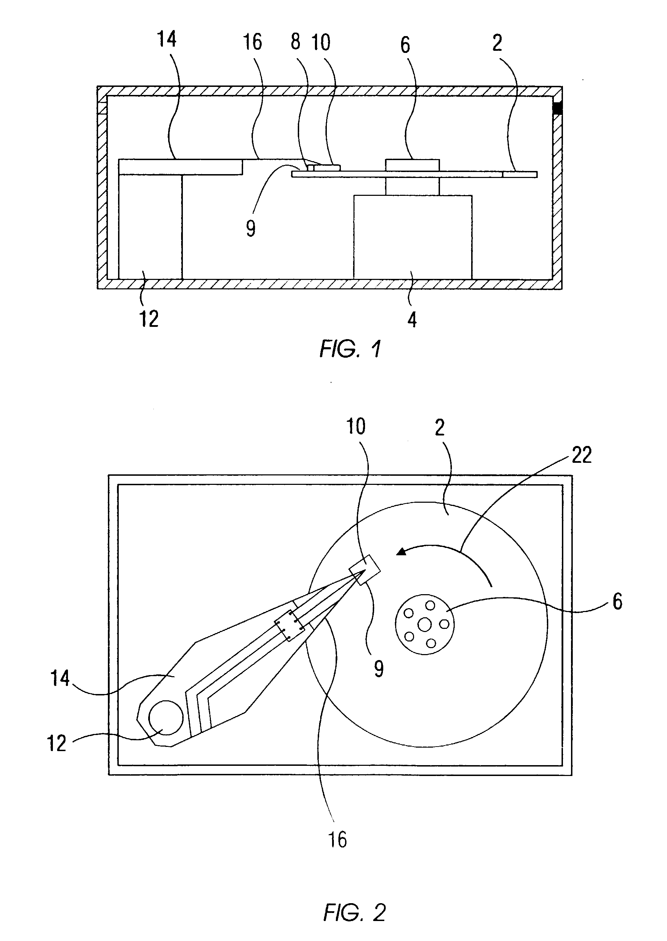

Referring to Figs. 1 and 2, there is shown a magnetic recording disk drive. The magnetic recording disk 2 is rotated by spindle motor 4 with hub 6. The disk generally comprises a substrate, a metallic magnetic layer, an optional carbon layer and a bonded or nonbonded polymeric layer, e.g., perfluoropolyether.

A read/write head or transducer 8 is formed on the trailing end of a carrier, or slider 10. Suitable sliders are positive or negative air bearing sliders. Suitable negative air bearing sliders are disclosed in U.S. Patents 4,894,740 and 5,438,467 the disclosures of which are incorporated herein by reference. Head 8 may be an inductive read and write transducer or an inductive write transducer with a magnetoresistive read transducer. The slider 10, is connected to the actuator 12 by means of a rigid arm 14 and suspension 16. The suspension 16 provides a bias force which urges the slider 10 onto the surface of the recording disk 2.

During operation of the disk drive, the spindle motor 4 rotates the disk 2 at a constant speed in the direction of arrow 22, and the actuator 12, which is typically a linear or rotary motion coil motor, moves the slider 10 generally radially across the surface of the disk 2 so that the read/write head may access different data tracks on disk 2.

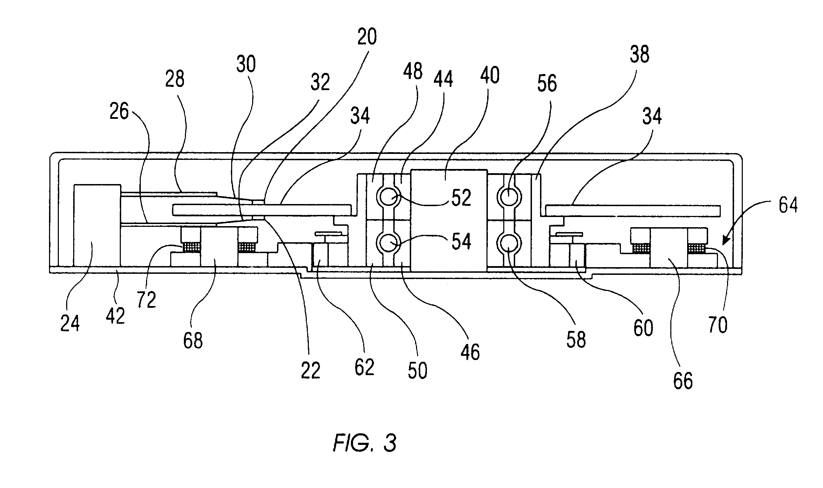

Referring to Fig. 3, heads 20 and 22 are connected to actuator 24 by means of arms 26 and 28 and suspensions 30 and 32. Disk 34 is supported on hub or rotor 38 which is rotably mounted on shaft 40. Shaft 40 is supported on housing 42. A plurality of permanent magnets (e.g., 60 and 62) as sections of an annular ring magnet are attached to hub 38. Stator 64 is supported on housing 42 and has a plurality of axial posts 66 and 68 and coils 70 and 72 disposed around the posts. Magnets 60 and 62 are preferably made of high moment magnetic material such as neodymuim-iron-boron or samarium-cobalt. The annular ring magnet comprises a plurality of individual magnet sections with magnetic fields which alternatively point radially outwardly and inwardly around the ring. When an electrical current is applied to each coil of the stator, a magnetic field is induced which attracts or repels the permanent magnet sections to cause rotation of the hub.

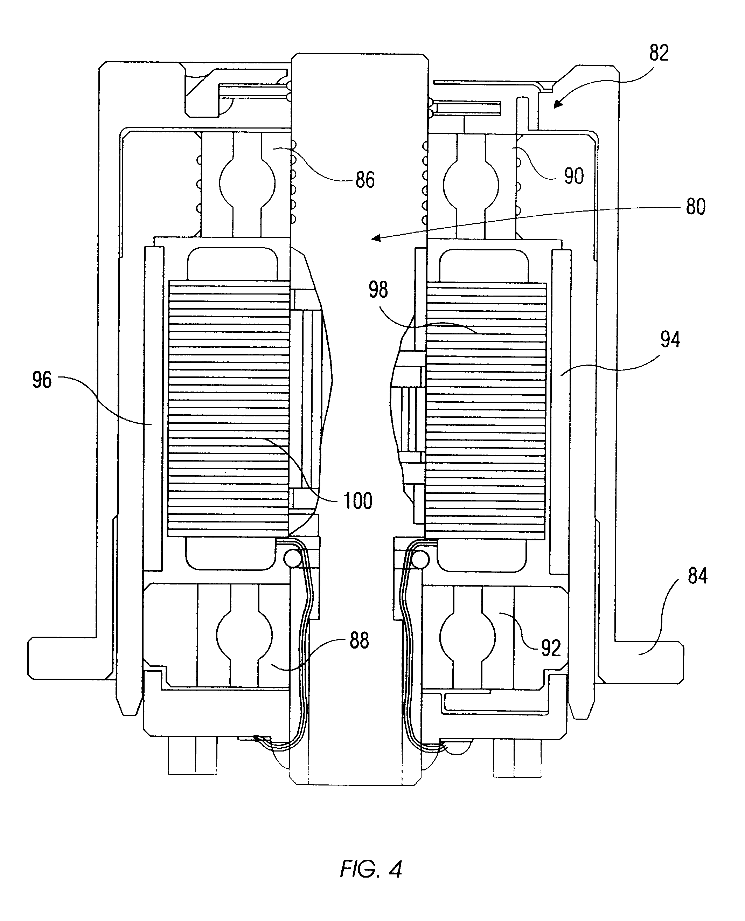

An annular race is formed between hub 38 and shaft 40. Suitably the annular race comprises inner races 44 and 46 which are attached to and part of shaft 40 and outer races 48 and 50 which are attached to and part of hub 38. Ball bearings 52, 54, 56 and 58 are disposed in the annular race track formed by races 44, 46, 48 and 50. Referring to Fig. 4, there is shown an in hub brushless D.C. spindle motor comprising shaft 80 and hub 82 having lip 84 for supporting the disk. The shaft has inner races 86 and 88 and hub has outer races 90 and 92. Permanent magnet sections 94 and 96 are attached to hub 80. Coils 98 and 100 of stator are attached to shaft 80. Other suitable spindle motors are known to those skilled in the art such as disclosed in U.S. Patents 5,502,605; 4,841,393; 5,448,119; 4,841,393 and 5,296,981, the disclosures of which are incorporated herein by reference for all purposes.

The annular race is filled with a lubricating grease which coats the ball bearings. The lubricant grease generally comprises a thickener, an oil, a $C_{1-10}$ alkyl diphenyl amine and a $C_{1-10}$ alkyldithiocarbamate.

The first component of the lubricant is an oil. Suitable oils include ester oils (e.g., synthetic ester oils) and mineral oils (e.g., polyalpha olefin oil). Preferably the oil is an ester oil. The ester oil may have chain branching and may have some unreacted hydroxyl groups. Suitable ester oils are di-$C_{1-10}$ alkyl (e.g., dioctyl, dibutyl, di ethyl hexyl) sebacate; pentaerythritol tetra esters of $C_{1-10}$ carboxylic acids; tri $C_{1-6}$ alkyl and trimethylol propane triheptanoate. Suitable ester oils have the formula: $C(CH_2OOC(CH_2) \times CH_3)_4$ where x is 1-10. A preferred ester oil is pentaerythritol tetrapentanoate. The second component of the lubricant is the $C_{1-10}$ alkyl diarylamine. Suitable amines are $c_{2-10}$ alkylated diphenyl amine $C_{2-10}$ and alkylated phenyl napthylamine. A preferred amine is di $C_{2-10}$ alkyl diphenyl amine e.g.; dioctyl diphenylamine. The third component of the lubricant is a transition metal di $C_{1-10}$ alkyl dithiocarbamate. A suitable carbamate is zinc diamyldithiocarbamate. Other suitable transition metals for the carbamate are copper, tin, antimony and cadmium. The last component of the lubricant is a thickener. Suitable thickener will be known to those skilled in the art such as fatty acid salts and polyurea. Suitable fatty acid surfactants include alkali or alkaline (e.g., lithium, sodium, calcium, barium) $C_{10}$ - $C_{26}$ (preferably $C_{16-20}$) fatty acid salts optionally having one or more hydroxy substituents. A preferred surfactant is lithium hydroxysterate. Other surfactants include alkali palmitate and alkali icosanate ($C_{20}$).

Preferably the lubricant comprises about equal molar amounts of the amine and carbamate components e.g.,

$$\frac{\text{moles of amine/litre of oil}}{\text{moles of amine + moles of carbamate/litre of oil}}$$

is about 0.40 to 0.60 preferably about 0.45 to 0.55 more preferably about 0.48 to 0.52, most preferably about 0.5. Preferably the total moles amine and carbamate/litre of oil is greater than about 0.015, more preferably greater than about 0.02 and less than about 0.15 preferably less than about 0.10 and more preferably less than about 0.05.

Surprisingly, the synergistic interaction of the lubricant components enables long term high speed operation of the spindle motor without degradation of performance. Other minor components (e.g., less than 5 weight %) known to those skilled in the art can also be added to the lubricant such as antioxidants, metal deactivators, antiwear agents, corrosion inhibitors and other additives known to those skilled in the art.

The following examples are detailed descriptions of the present invention. The detailed descriptions fall within the scope of, and serve to exemplify, the more generally described invention set forth above. The examples are presented for illustrative purposes only, and are not intended as a restriction on the scope of the invention.

## Example

Several lubricant compositions were tested for stability. Each composition comprised the following components: zinc diamyldithiocarbamate, dioctyl diphenyl amine and an ester oil (a blend of pentaerythritol tetra pentanoate, hexanoate and heptanoate.) Five grams of the oil composition containing additives was placed in a 50 ml pyrex beaker and covered with tin foil. A 5 mm hole in the centre of the tin foil allowed periodic sampling of the oil for analysis. In some of the tests clean ball bearings were immersed in the oil. The compositicns were monitored by UV spectroscopy and failure was detected by sudden absorbance between 200-300 nm. The results are shown in Table 1. It can be seen from the results that compositions having about equal molar amounts of the carbamate and amine component exhibited synergistic improvement in stability.

**TABLE 1**

| Test No. | Ball Bearings | Carbamate (Moles/Litre) | Amine (Moles/Litre) | + Carbamate (Mole/Litre) | DDA (Mole Fraction) | Life (hrs) |
|---|---|---|---|---|---|---|
| 1 | 0 | 0.0000 | 0.0000 | 0.0000 | 0.00 | 140 |
| 2 | 4 | 0.0000 | 0.0000 | 0.0000 | 0.00 | 135 |
| 3 | 0 | 0.0109 | 0.0109 | 0.0218 | 0.50 | 4320 |
| 4 | 4 | 0.0047 | 0.0064 | 0.0111 | 0.57 | 630 |
| 5 | 4 | 0.0095 | 0.0127 | 0.0222 | 0.57 | >1800 |
| 6 | 4 | 0.0009 | 0.0025 | 0.0035 | 0.73 | 730 |
| 7 | 4 | 0.0009 | 0.0025 | 0.0035 | 0.73 | 940 |
| 8 | 4 | 0.0024 | 0.0064 | 0.0087 | 0.73 | 470 |
| 9 | 4 | 0.0047 | 0.0127 | 0.0174 | 0.73 | 510 |
| 10 | 4 | 0.0095 | 0.0254 | 0.0349 | 0.73 | 570 |
| 11 | 4 | 0.0047 | 0.0254 | 0.0301 | 0.84 | ppt216 |
| 12 | 4 | 0.0024 | 0.0127 | 0.0151 | 0.84 | 610 |
| 13 | 4 | 0.0091 | 0.0610 | 0.0700 | 0.87 | ppt216 |

Although this invention has been described with respect to specific embodiments, the details thereof are not to be construed as limitations for it will be apparent that various embodiments, changes and modifications may be resorted to without departing from the spirit and scope thereof, and it is understood that such equivalent embodiments are intended to be included within the scope of this invention.

**Claims**

1. A spindle motor for use in a magnetic recording device comprising:

a shaft, a rotor and a plurality of bearings interposed between the shaft and rotor, the bearings coated with a lubricant comprising a thickener, an oil, alkyl diaryl amine and a transition metal $C_{1-10}$ alkyl dithiocarbamate where moles of amine/litre of oil / moles of amine and carbamate/litre oil is about 0.40 to 0.60 and moles of amine and carbamate/litre oil is greater than 0.015.

2. The motor of claim 1 wherein the thickener is alkali hydroxystearate, and the oil is an ester oil.

3. The motor of claim 2 wherein the $C_{1-10}$ alkyl diaryl amine is $C_{1-10}$ di alkyl diphenyl amine or $C_{1-10}$ dialkyl phenyl napthylamine.

4. The motor of claim 3 wherein the alkyl diaryl amine is dioctyl diphenyl amine.

5. The motor in claim 2 wherein the transition metal is selected from zinc, copper, tin, antimony or cadmium.

6. The motor of claim 5 wherein the dithiocarbamate is zinc diamyldithiocarbamate.

7. The motor of claim 2 wherein the ester oil is di-$C_{1-10}$ alkyl sebacate, pentaerythritol tetra $C_{2-10}$ alkanoate, triesters of trimellitic acid or trimethylol propane triheptanoate.

8. The motor of claim 7 wherein the ester oil is pentaerythritol tetra $C_{2-8}$ alkanoate.

9. A spindle motor for use in a magnetic recording device comprising a shaft, a rotor and a plurality of bearings positioned in an annular race formed between the shaft and rotor, the bearings coated with a lubricant comprising lithium hydroxystearate, ester oil, dioctyl diphenyl amine and zinc diamyl dithiocarbamate where moles of amine/litre of oil / moles of amine and carbamate/litre oil is about 0.40 to 0,60 and moles of amine and carbamate/litre of oil is greater than 0.015.

10. The motor of claim 9 wherein the ester oil is pentaerythritol tetra $C_{4-8}$ alkanoate.

FIG. 1

FIG. 2

FIG. 3

FIG. 4

European Patent
Office

**EUROPEAN SEARCH REPORT**

Application Number

EP 98 30 1214

## DOCUMENTS CONSIDERED TO BE RELEVANT

| Category | Citation of document with indication, where appropriate, of relevant passages | Relevant to claim | CLASSIFICATION OF THE APPLICATION (Int.Cl.6) |
|---|---|---|---|
| Y | PATENT ABSTRACTS OF JAPAN<br>vol. 097, no. 005, 30 May 1997<br>& JP 09 003468 A (HITACHI LTD;COSMO OIL CO LTD), 7 January 1997,<br>* abstract * | 1-10 | C10M169/00<br>G11B19/20<br>//(C10M169/00,<br>105:36,105:38,<br>117:04,133:12,<br>135:18), |
| Y | PATENT ABSTRACTS OF JAPAN<br>vol. 017, no. 681 (P-1660), 14 December 1993<br>& JP 05 225688 A (NEC IBARAKI LTD), 3 September 1993,<br>* abstract * | 1-10 | C10N10:02,<br>C10N10:04,<br>C10N10:08,<br>C10N10:10,<br>C10N50:10 |
| A | US 5 347 189 A (MASANOBU CHUTA) 13 September 1994<br>* column 2, line 15 - line 34 *<br>* column 3, line 5 * | 1,9 | |
| P,A | US 5 641 841 A (A.F. DIAZ) 24 June 1997<br>* column 2, line 33 - line 34 *<br>* column 7, line 29 - line 34 * | 1,2,7-10 | |
| A | GB 795 811 A (C.C. WAKEFIELD)<br>* page 1, line 51 - line 52 *<br>* page 3; example 13 *<br>* page 6, line 40 *<br>* page 7, line 10 - line 11 *<br>* page 7; example IV * | 1-5,7,9 | TECHNICAL FIELDS SEARCHED (Int.Cl.6)<br>C10M<br>G11B |
| A | GB 693 697 A (N.V. DE BATAAFSCHE PETROLEUM MAATSCHAPPIJ)<br>* page 1, line 31 - line 43 *<br>* page 2, line 77 - line 78 *<br>* page 3, line 52 *<br>* page 3, line 104 - line 105 * | 1,2,5-7,9 | |

The present search report has been drawn up for all claims

| Place of search | Date of completion of the search | Examiner |
|---|---|---|
| THE HAGUE | 29 June 1998 | Hilgenga, K |

CATEGORY OF CITED DOCUMENTS

X : particularly relevant if taken alone
Y : particularly relevant if combined with another document of the same category
A : technological background
O : non-written disclosure
P : intermediate document

T : theory or principle underlying the invention
E : earlier patent document, but published on, or after the filing date
D : document cited in the application
L : document cited for other reasons

& : member of the same patent family, corresponding document

EPO FORM 1503 03.82 (P04C01)